# EUROPÄISCHE PATENTSCHRIFT

(11) **EP 2 414 214 B1**
(45) Veröffentlichungstag und Bekanntmachung des Hinweises auf die Patenterteilung: **18.02.2015**
(21) Anmeldenummer: 10711242.7
(22) Anmeldetag: 29.03.2010
(51) Int. Cl.: B62D 35/00

(54) **SYSTEM ZUR VERRINGERUNG DES LUFTWIDERSTANDES EINES LASTKRAFTWAGENS**
SYSTEM FOR REDUCING THE AIR RESISTANCE OF A TRUCK
SYSTÈME PERMETTANT DE RÉDUIRE LA RÉSISTANCE DE L'AIR SUR UN CAMION

(30) Priorität: 30.03.2009 DE 102009001975
(43) Veröffentlichungstag der Anmeldung: 08.02.2012
(73) Patentinhaber: Jost-Werke GmbH, 63263 Neu-Isenburg (DE)
(72) Erfinder: ALGÜERA GALLEGO, José Manuel, 63739 Aschaffenburg (DE)
(74) Vertreter: Mehler Achler
(86) Internationale Anmeldenummer: PCT/EP2010/054127
(87) Internationale Veröffentlichungsnummer: WO 2010/112467

(56) Entgegenhaltungen:
- EP-A1- 1 234 715
- EP-A1- 1 375 254
- DE-A1- 19 645 503
- DE-A1- 19 756 307
- DE-U1- 8 810 497
- GB-A- 2 241 205
- GB-A- 2 360 494
- US-B1- 7 261 354

## Beschreibung

Die Erfindung betrifft ein System zur Verringerung des Luftwiderstandes eines Lastkraftwagens, insbesondere eines Sattelzuges gemäß den im Oberbegriff des Anspruchs 1 stehenden Merkmale.

Üblicherweise werden Lastkraftwagen mit einem möglichst maximierten Laderaum gebaut. Dieses führt in der Regel dazu, dass die im direkt proportionalen Verhältnis zum Luftwiderstand stehende Stirnfläche groß und daraus resultierend der Kraftstoffverbrauch hoch ist. Andererseits wird der zur Verfügung stehende Laderaum in der Praxis kaum vollständig genutzt, da oftmals kleinere Ladungsträger transportiert werden oder oberhalb der Ladung ein freier Platz gelassen wird, um während des Be- und Entladens einen ausreichenden Bewegungsfreiraum zu erhalten.

Um den Luftwiderstand und damit den Kraftstoffverbrauch eines Lastkraftwagens zu senken, wurden bereits zum Beispiel in der gattungsgemäßen DE 88 10 497 U1 oder der gattungsgemäßen GB 2 241 205 A Bestrebungen unternommen, die Höhe des Laderaums durch ein Absenken der Dachwand bei teilweise beladenem oder leerem Laderaum zu verringern.

Demzufolge lag der Erfindung die Aufgabe zugrunde, ein System bereitzustellen, welches stets die Stirnfläche des Lastkraftwagens und somit den Kraftstoffverbrauch in Abhängigkeit des tatsächlich genutzten Laderaums minimiert.

Die Aufgabe wird erfindungsgemäß mit einem System gemäß den im kennzeichnenden Teil des Anspruchs 1 stehenden Merkmalen gelöst. Hieraus resultiert der Vorteil, dass vor Fahrtantritt oder während der Fahrt in Abhängigkeit des tatsächlich vorhandenen Ladevolumens die Fläche der Stirnseite durch ein Absenken der Dachwand verringert werden kann. Bei unbeladenen oder nur mit niedrigen dungsträgern bestückten Lastkraftwagen ist es zum Beispiel möglich, die Dachwand bis auf ein Niveau unterhalb des Fahrerhauses abzusenken.

Die Höhenverstellung der Dachwand sollte in einer Ebene vorzugsweise parallel zu der ursprünglich eingestellten, im Wesentlichen zum Ladeboden parallelen Ausrichtung erfolgen. Alternativ kann die Dachwand auch geneigt, insbesondere nach vorne abfallend, ausgerichtet sein.

Vorzugsweise ist eine Höhenverstellung der Dachwand mittels teleskopierbarer Stützen möglich. Diese können hinsichtlich ihres Verfahrweges zumindest paarweise aneinander gekoppelt sein. Die teleskopierbaren Stützen sollten für eine gleichmäßige Kraftaufnahme und aus Gründen einer einfachen Be- und Entladbarkeit in den vier Ecken des Laderaums angeordnet sein.

Es hat sich dabei als günstig herausgestellt, die Stützen mit einem motorischen Antrieb auszustatten. Hierdurch erfolgt eine für den Fahrer komfortable Verstellung der Stützen, wobei bei einem oder mehreren ausreichend dimensionierten Antrieb(en) ein zeitgleiches und damit schnelles Anheben beziehungsweise Absenken der Dachwand möglich ist. Sofern mehrere Antriebe zum Einsatz kommen, sollten diese über ein gemeinsames Steuergerät in Betrieb gesetzt werden können. Das Steuergerät steht gemäß einer besonders zweckmäßigen Ausführungsform fernbedienbar mit einer Anzeige- und Bedieneinrichtung in Kontakt.

Vorteilhafterweise sind mehrere motorische Antriebe in Form einer Spindel und/oder eines pneumatischen Zylinders und/oder einer Zahnstange vorgesehen. Alternativ oder ergänzend kann der motorische Antrieb auch ein Scherengelenk und/oder einen Seilzug umfassen. Die vorstehend näher bezeichneten motorischen Antriebe ermöglichen eine stufenlose laterale Verstellung der Stützen und somit eine ebenfalls stufenlose Höhenanpassung der Dachwand. Zweckmäßigerweise ist der Laderaum seitlich durch höhenverstellbare Bordwände begrenzt. Diese sorgen für einen nach außen abgeschlossenen Laderaum unabhängig von der Einfahrposition der Dachwand gegenüber dem Ladeboden. Ein wesentlicher Vorteil der höhenverstellbaren Bordwände besteht darin, dass bei einer im Fahrbetrieb abgesenkten Dachwand kein überflüssiges Material der seitlichen Bordwände lose vom Lastkraftwagen herunterhängt und durch Schlagen im Fahrtwind beschädigt wird beziehungsweise andere Verkehrsteilnehmer gefährdet. Dabei sollte auch die Hecktür als höhenverstellbare Bordwand ausgebildet sein.

Bei formstabilen Bordwänden können diese beispielsweise in senkrechter Richtung zweigeteilt und überlappend ausgeformt sein.

Alternativ können die höhenverstellbaren Bordwände auch jeweils aus einer um eine horizontale Achse aufrollbaren Plane gebildet sein. Gemäß einer weiteren Ausgestaltung ist vorgesehen, die Plane beim Herunterfahren der Dachwand in einem Faltenschlag um eine horizontale Faltachse zusammenzulegen. Die höhenverstellbaren Bordwände sollten vorzugsweise mit dem motorischen Antrieb der Stützen gekoppelt sein. Anstelle einer Plane kann auch ein Rollladen mit einer Vielzahl untereinander gelenkig verbundener Wandpanele verwendet werden.

Gemäß einer alternativen Ausführungsform ist es auch möglich, die höhenverstellbaren Bordwände aus verschiebbaren oder faltbaren Wandpanelen auszubilden. Diese können bei einem Absenken/Anheben der Dachwand in ein beziehungsweise aus einem Magazin bewegt werden. Eine derartige Höhenverstellung der seitlichen Bordwände erfolgt zweckmäßigerweise ohne einen eigenen dafür vorgesehenen motorischen Antrieb.

Anstelle der visuellen Erfassung der Beladungshöhe ist jedoch ein Ladehöhenerkennungsmodul vorgesehen, welches die tatsächliche Beladungshöhe erkennt und gegebenenfalls automatisch die Höhenverstellung der Dachwand vornimmt. Diese Ausführungsform ermöglicht insbesondere eine aus dem Fahrerhaus fernbedienbare Höhenverstellung, ohne dass der Laderaum vom Fahrer betreten werden muss.

Es hat sich als besonders zweckmäßig herausgestellt, wenn das Ladehöhenerkennungsmodul die Beladungshöhe mittels mindestens eines Lasers und/oder Ultraschallsensors und/oder Infrarotsensors erfasst. Gemäß einer ersten bevorzugten Ausführungsform sind der Laser und/oder Ultraschallsensor und/oder Infrarotsensor gleichzeitig Sender sowie Empfänger und wirken mit auf der gegenüberliegenden Seite des Laderaums angeordneten Reflektoren zusammen. Vorteilhafterweise sind an der zum Fahrerhaus benachbarten Bordwand zwei Sender/Empfänger und an der gegenüberliegenden Bordwand zwei Reflektoren angeordnet. Eine besonders umfassende Überwachung der Beladungshöhe wird erreicht, wenn die von dem jeweiligen Sender emittierten Signale kreuzweise den Laderaum durchlaufen.

In einer zweiten, besonders vorteilhaften Ausführungsform ist der Ultraschallsensor als Ultraschalleinheit zur 3D-Abtastung des Laderaums ausgebildet. Hierbei handelt es sich um einen so genannten dreidimensionalen Scanner, der ohne zusätzliche Reflektoren auskommt. Diese Ausführungsform minimiert den Platzbedarf für das Ladehöhenerkennungsmodul und senkt gleichzeitig das Risiko von Beschädigungen der Einzelkomponenten durch Teile der Ladung beim Be- und Entladen.

Die Höhenverstellung der Dachwand kann zusätzlich in Abhängigkeit der Fahrgeschwindigkeit erfolgen. Sofern ein Steuergerät für die Inbetriebnahme der motorischen Antriebe verwendet wird, kann dieses beispielsweise mit dem Fahrzeugsteuergerät kommunizieren und von diesem ein Signal über die gefahrene Geschwindigkeit erhalten. Eine Höhenverstellung erfolgt dann erst bei Befahren von Schnellstraßen oder Autobahnen, wo sich aufgrund der hohen Fahrgeschwindigkeit eine Verminderung des Luftwiderstandes durch ein Absenken der Dachwand besonders bemerkbar macht.

Günstigerweise ist auf dem Dach des Lastkraftwagens ein Windabweiser angeordnet, dessen Neigung an die Höhe der Dachwand anpassbar ist. Der Windabweiser sollte dafür ebenfalls mit einem Verstellmotor versehen sein. Der Verstellmotor ist gemäß einer besonders vorteilhaften Ausführungsform mit dem Steuergerät für die Stützen der Dachwand verbunden und erhält ein entsprechendes Signal in Abhängigkeit von dessen Ausfahrzustand. Hierdurch wird vermieden, dass sich der Windabweiser in einer aufgestellten Position befindet, obwohl die Dachwand bereits abgesenkt wurde und sich beispielsweise im Windschatten des Fahrerhauses befindet.

Zum besseren Verständnis wird die Erfindung nachfolgend anhand von fünf Figuren näher erläutert. Es zeigen die
- **Fig. 1:**: eine schematische Seitenansicht auf einen Sattelzug bei maximaler Höhe des Laderaums;
- **Fig. 2:**: eine Ansicht auf den Sattelzug gemäß Fig. 1 mit abgesenkter Dachwand;
- **Fig. 3:**: eine Draufsicht auf einen Auflieger und ein darin befindliches Ladehöhenerkennungsmodul gemäß einer ersten Ausführungsform;
- **Fig. 4:**: eine dreidimensionale Ansicht eines Aufliegers mit einem darin angeordneten Ladehöhenerkennungsmodul gemäß einer zweiten Ausführungsform;
- **Fig. 5a:**: einen teilweisen Längsschnitt entlang der Ebene A:A in Figur 3 mit in der Höhe variablen Bordwänden aus faltbaren Wandpanelen;
- **Fig. 5b:**: einen teilweisen Längsschnitt entlang der Ebene A:A in Figur 3 mit in der Höhe variablen Bordwänden aus einer mit Faltenschlag zusammenlegbaren Plane;
- **Fig. 5c:**: einen teilweisen Längsschnitt entlang der Ebene A:A in Figur 3 mit in der Höhe variablen Bordwänden aus Rollläden.

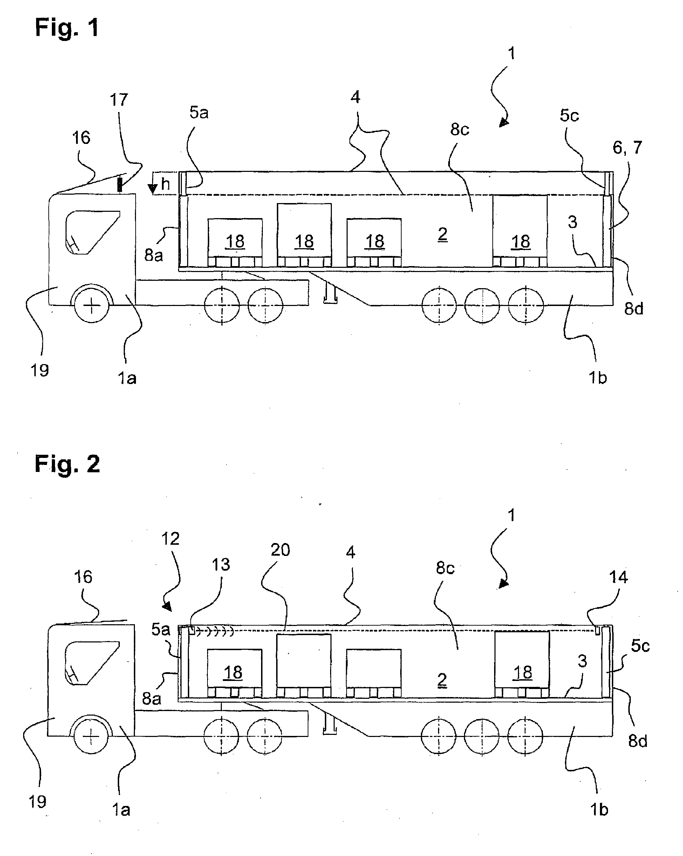

Die Figur 1 zeigt einen Lastkraftwagen 1 umfassend ein Zugfahrzeug 1 a und einen daran über eine gewöhnliche Sattelkupplung lösbar befestigbaren Auflieger 1 b. Der Auflieger 1 b weist einen Laderaum 2 auf, auf dessen Ladeboden 3 insgesamt vier Ladungsträger 18 stehen. Die Ladungsträger 18 sind beispielsweise Europaletten mit einem darauf befindlichen Stückgut.

Der Laderaum 2 ist seitlich von senkrecht zum Ladeboden 3 ausgerichteten Bordwänden 8a, 8b, 8c, 8d umgeben, wobei in den schematischen Seitenansichten der Figuren 1 und 2 die Bordwand 8d als Hecktür ausgebildet und aus Veranschaulichungsgründen die Bordwand 8b weggelassen wurde. Nach oben verschließt den Laderaum 3 eine parallel zu diesem ausgerichtete Dachwand 4.

Die Dachwand 4 ist am vorderen und hinteren Ende des Aufliegers 1 b jeweils durch zwei Stützen 5a, 5b und 5c, 5d gegenüber dem Ladeboden 3 abgestützt. In der dargestellten Position der Dachwand 4 überragt diese in vertikaler Richtung nach oben das Fahrerhaus 19 des Zugfahrzeugs 1a, auf dessen Dach zur Minderung des Luftwiderstandes ein Windabweiser 16 angeordnet ist.

Die auf dem Ladeboden 3 aufstehenden Ladungsträger 18 füllen den Laderaum 2 insbesondere nach oben nur teilweise aus, so dass erfindungsgemäß ein Absenken der Dachwand 4 auf das mit unterbrochener Linie skizzierte Niveau um den Verstellweg h möglich ist. Hierfür werden die mit einem motorischen Antrieb 6 versehenen Stützen 5a, 5b, 5c, 5d eingefahren, wobei als Antrieb 6 vorzugsweise pneumatische Zylinder 7 eingesetzt sind.

Nach dem Verstellen der Dachwand 4 auf ein der tatsächlichen Beladung entsprechendes Niveau sollte auch die Stellung des Windabweisers 16 angepasst werden. Dieses kann beispielsweise mit einem an dem Windabweiser 16 angreifenden Verstellmotor 17 durchgeführt werden, wobei die Verstellung des Windabweisers 16 und der Dachwand 4 zweckmäßigerweise über ein gemeinsames hier nicht gezeigtes elektronisches Steuergerät durchgeführt werden sollte.

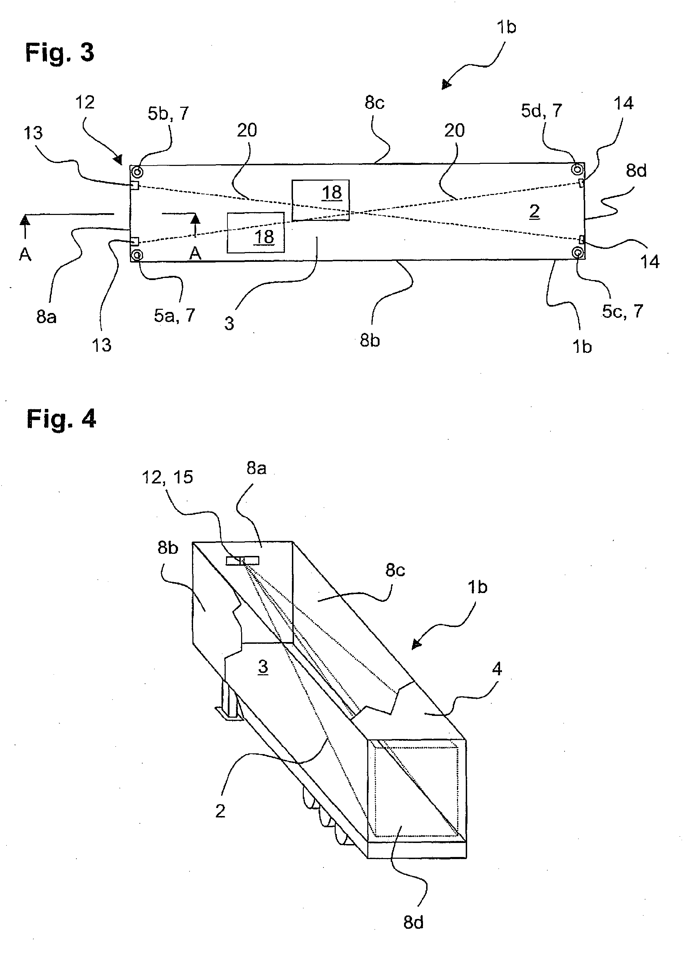

In der Figur 2 ist die Dachwand 4 des Aufliegers 1 b auf ein niedrigeres Niveau entsprechend der Höhe der geladenen Ladungsträger 18 abgesenkt. Deren Oberkante wird von einem Ladehöhenerkennungsmodul 12 detektiert, welches im Bereich der vorderen Stützen 5a, 5b (siehe auch Figur 3) einen kombinierten Sender/Empfänger 13 und im Heckbereich, benachbart zu den Stützen 5c, 5d, einen zugehörigen Reflektor 14 umfasst. Nach Abschluss des Beladungsvorganges emittiert der Sender/Empfänger 13 ein Signal in Richtung des Reflektors 14, welches, sofern keine Ladungsträger 18 den Strahlengang 20 blockieren, von diesem reflektiert und von dem Sender/Empfänger 13 erfasst wird. Sowohl der Sender/Empfänger 13 als auch der Reflektor 14 sollten ortsfest zu der Dachwand 4 angeordnet sein. Ein Absenken der Dachwand 4 ist dann solange möglich, bis der Strahlengang 20 im Sinne einer Lichtschranke von mindestens einem Ladungsträger 18 unterbrochen ist.

Durch das Absenken der Dachwand 4 unterhalb des Niveaus des Fahrerhauses 19 erfolgt eine massive Verringerung des Luftwiderstandes. In dieser Position der Dachwand 4 kann der Windabweiser 16 mit einer möglichst geringen Neigung gefahren werden.

Die Figur 3 zeigt in einer Draufsicht den kreuzenden Strahlengang 20 zweier Sender/Empfänger 13 und der beiden zugehörigen Reflektoren 14. Durch die Anordnung der jeweils zusammenwirkenden Sender/Empfänger 13 und Reflektoren 14 auf gegenüberliegenden Seiten des Aufliegers 1 b erfolgt eine besonders umfängliche Überwachung des Laderaums 2.

Eine alternative Ausführungsform des Ladehöhenerkennungsmoduls 12 ist in Figur 4 dargestellt. Hierbei befindet sich in der vorderen, stirnseitigen Bordwand 8a eine 3D-Ultraschalleinheit 15, welche den Laderaum 2 abtastet und dadurch die Beladungshöhe etwaiger Ladungsträger 18 erfasst. Diese Ausführungsform kommt ohne zusätzliche Reflektoren 14 aus. Darüber hinaus ist es möglich, die 3D-Ultraschalleinheit 15 ortsfest in der Bordwand 8a zu installieren, wodurch das Risiko von Beschädigungen oder unbeabsichtigter Dejustierungen weiter verringert wird.

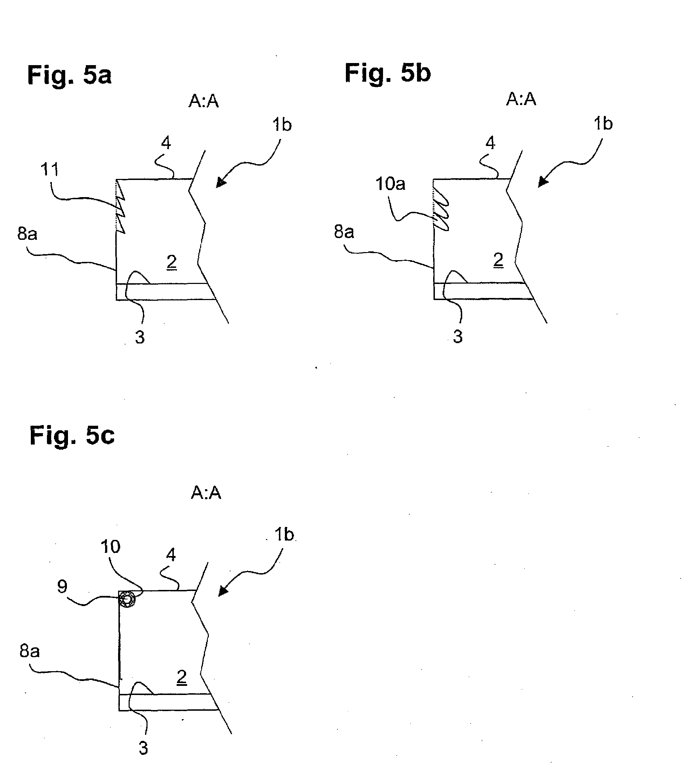

Mit dem Absenken der Dachwand 4 ist es auch sinnvoll, die Höhe der Bordwände 8a, 8b, 8c, 8d anzupassen und dadurch stets einen rundherum abgeschlossenen Laderaum 2 zu gewährleisten. In den nachfolgend beschriebenen Figuren 5a, 5b und 5c ist aus Gründen einer besseren Darstellbarkeit jeweils die vordere stirnseitige Bordwand 8a in der Höhe variabel verstellbar dargestellt. In gleicher Weise sind ebenfalls die Bordwände 8b, 8c, 8d höhenverstellbar ausgebildet.

Gemäß der in Figur 5a gezeigten Ausführungsform erfolgt die Höhenverstellung der Bordwände 8a, 8b, 8c, 8d durch horizontal ausgerichtete Wandpanele 11, die an ihrer oberen und unteren Längskante gelenkig miteinander verbunden sind und bei einem absenken der Dachwand 4 zieharmonikaartig zusammenwandem. Hierbei können die Bordwände 8a, 8b, 8c 8d als formstabile Elemente ausgebildet sein.

Die Figur 5b stellte eine Ausführungsform für Lastkraftwagen 1 mit einer den Laderaum 2 überdeckenden Plane 10 dar. Diese weist in horizontaler Richtung einen oder mehrere über die gesamte Breite der jeweiligen Bordwand 8a, 8b, 8c, 8d verlaufende(n) Faltenschla(ä)g(e) 10a auf.

In Figur 5c ist eine weitere Ausführungsform zu erkennen, bei der die Plane 10 oder auch gelenkig miteinander verbundene Wandpanele 11 um eine horizontale Achse 9 aufwickelbar sind und ein Rollo beziehungsweise einen Rollladen ausbilden.

### Bezugszeichenliste

- 1: Lastkraftwagen
- 1a: Zugfahrzeug
- 1: b Auflieger
- 2: Laderaum
- 3: Ladeboden
- 4: Dachwand
- 5a-d: Stützen
- 6: motorischer Antrieb
- 7: pneumatischer Zylinder
- 8a-d: Bordwand
- 9: horizontale Achse
- 10: Plane
- 10a: Faltenschlag Plane
- 11: Wandpanele
- 12: Ladehöhenerkennungsmodul
- 13: Sender/Empfänger
- 14: Reflektor
- 15: 3D-Ultraschalleinheit
- 16: Windabweiser
- 17: Verstellmotor Windabweiser
- 18: Ladungsträger
- 19: Fahrerhaus
- 20: Strahlengang

- h: Verstellweg Dachwand

## Patentansprüche

1. System zur Verringerung des Luftwiderstandes eines Lastkraftwagens (1), insbesondere eines Sattelzuges, wobei dieser einen Laderaum (2) umfasst, welcher nach unten durch einen Ladeboden (3) und in seiner Höhe durch eine dazu beabstandete Dachwand (4) begrenzt ist, wobei die Dachwand (4) gegenüber dem Ladeboden (3) höhenverstellbar ist, **dadurch gekennzeichnet,**
**dass** ein Ladehöhenerkennungsmodul (12) vorgesehen ist, welches die tatsächliche Beladungshöhe innerhalb des Laderaumes (2) erfasst und automatisch die Höhenverstellung der Dachwand (4) vornimmt.

2. System nach Anspruch 1, **dadurch gekennzeichnet, dass** der Abstand zwischen Dachwand (4) und Ladeboden (3) mittels höhenverstellbarer Stützen (5a, 5b, 5c, 5d) veränderbar ist.

3. System nach Anspruch 2, **dadurch gekennzeichnet, dass** die Stützen (5a, 5b, 5c, 5d) teleskopierbar sind.

4. System nach Anspruch 2 oder 3, **dadurch gekennzeichnet, dass** die Stützen (5a, 5b, 5c, 5d) einen motorischen Antrieb (6) aufweisen.

5. System nach Anspruch 4, **dadurch gekennzeichnet, dass** der motorische Antrieb (6) eine Spindel und/oder einen pneumatischen Zylinder (7) und/oder eine Zahnstange und/oder ein Scherengelenk und/oder einen Seilzug umfasst.

6. System nach einem der Ansprüche 1 bis 5, **dadurch gekennzeichnet, dass** der Laderaum (2) seitlich durch höhenverstellbare Bordwände (8a, 8b, 8c, 8d) begrenzt ist.

7. System nach Anspruch 6, **dadurch gekennzeichnet, dass** mindestens eine höhenverstellbare Bordwand (8d) als höhenvariable Hecktür ausgebildet ist.

8. System nach Anspruch 6 oder 7, **dadurch gekennzeichnet, dass** die höhenverstellbaren Bordwände (8a, 8b, 8c, 8d) jeweils aus einer um eine horizontale Achse (9) aufrollbaren Plane (10) gebildet sind.

9. System nach Anspruch 6 oder 7, **dadurch gekennzeichnet, dass** die höhenverstellbaren Bordwände (8a, 8b, 8c, 8d) aus verschiebbaren oder faltbaren Wandpanelen (11) gebildet sind.

10. System einem der Ansprüche 1 bis 9, **dadurch gekennzeichnet, dass** das Ladehöhenerkennungsmodul (12) die Beladungshöhe mittels mindestens eines Lasers und/oder Ultraschallsensors und/oder Infrarotsensors erfasst.

11. System nach Anspruch 10, **dadurch gekennzeichnet, dass** der Laser und/oder Ultraschallsensor und/oder Infrarotsensor gleichzeitig Sender und Empfänger (13) sind und mit auf der gegenüberliegenden Seite des Laderaums (2) angeordneten Reflektoren (14) zusammenwirken.

12. System nach Anspruch 10, **dadurch gekennzeichnet, dass** der Ultraschallsensor als Ultraschalleinheit (15) zur 3D-Abtastung des Laderaums (2) ausgebildet ist.

13. System nach einem der Ansprüche 1 bis 12, **dadurch gekennzeichnet, dass** die Höhenverstellung der Dachwand (4) in Abhängigkeit der Fahrgeschwindigkeit erfolgt.

14. System nach einem der Ansprüche 1 bis 13, **dadurch gekennzeichnet, dass** auf dem Dach des Lastkraftwagens (1) ein Windabweiser (16) angeordnet ist, dessen Neigung an die eingestellte Höhe der Dachwand (4) anpassbar ist.

## Claims

1. System for reducing the air resistance of a truck (1), in particular an articulated truck, the truck comprising a load space (2) which is delimited at the bottom by a loading floor (3) and in height by a roof wall (4) which is spaced apart from the loading floor, the roof wall (4) being height-adjustable relative to the loading floor (3), **characterised in that**
there is provided a load height detection module (12) which determines the actual loading height within the load space (2) and automatically carries out the height adjustment of the roof wall (4).

2. System according to claim 1, **characterised in that** the distance between the roof wall (4) and the loading floor (3) can be changed by means of height-adjustable supports (5a, 5b, 5c, 5d).

3. System according to claim 2, **characterised in that** the supports (5a, 5b, 5c, 5d) are telescopic.

4. System according to claim 2 or 3, **characterised in that** the supports (5a, 5b, 5c, 5d) have a motor drive (6).

5. System according to claim 4, **characterised in that** the motor drive (6) comprises a spindle and/or a pneumatic cylinder (7) and/or a toothed rack and/or a scissor linkage and/or a wire rope hoist.

6. System according to any one of claims 1 to 5, **characterised in that** the load space (2) is delimited laterally by height-adjustable side walls (8a, 8b, 8c, 8d).

7. System according to claim 6, **characterised in that** at least one height-adjustable side wall (8d) is in the form of a variable-height rear door.

8. System according to claim 6 or 7, **characterised in that** the height-adjustable side walls (8a, 8b, 8c, 8d) are each formed of a tarpaulin (10) which can be rolled around a horizontal shaft (9).

9. System according to claim 6 or 7, **characterised in that** the height-adjustable side walls (8a, 8b, 8c, 8d) are formed from movable or foldable wall panels (11).

10. System according to any one of claims 1 to 9, **characterised in that** the load height detection module (12) determines the loading height by means of at least one laser and/or ultrasonic sensor and/or infra-red sensor.

11. System according to claim 10, **characterised in that** the laser and/or ultrasonic sensor and/or infra-red sensor are simultaneously a transmitter and receiver (13) and cooperate with reflectors (14) arranged on the opposite side of the load space (2).

12. System according to claim 10, **characterised in that** the ultrasonic sensor is in the form of an ultrasonic unit (15) for 3D scanning of the load space (2).

13. System according to any one of claims 1 to 12, **characterised in that** the height adjustment of the roof wall (4) takes place in dependence on the driving speed.

14. System according to any one of claims 1 to 13, **characterised in that** a wind deflector (16) is arranged on the roof of the truck (1), the inclination of which wind deflector can be adapted to the adjusted height of the roof wall (4).

## Revendications

1. Système pour réduire la résistance de l'air sur un camion (1), en particulier sur un semi-remorque, sachant que ce dernier comprend un espace de chargement (2) qui est délimité vers le bas par un plancher de chargement (3) et dans sa hauteur par une paroi de toit (4) distante dudit plancher, sachant que la paroi de toit (4) est réglable en hauteur par rapport au plancher de chargement (3), **caractérisé en ce qu'**il est prévu un module (12) de reconnaissance de la hauteur de chargement, qui détecte la hauteur effective du chargement à l'intérieur de l'espace de chargement (2) et entreprend automatiquement le réglage en hauteur de la paroi de toit (4).

2. Système selon la revendication 1, **caractérisé en ce que** la distance entre la paroi de toit (4) et le plancher de chargement (3) est modifiable au moyen de montants réglables en hauteur (5a, 5b, 5c, 5d).

3. Système selon la revendication 2, **caractérisé en ce que** les montants (5a, 5b, 5c, 5d) sont télescopiques.

4. Système selon la revendication 2 ou 3, **caractérisé en ce que** les montants (5a, 5b, 5c, 5d) présentent un entraînement motorisé (6).

5. Système selon la revendication 4, **caractérisé en ce que** l'entraînement motorisé (6) comprend une broche et/ou un vérin pneumatique (7) et/ou une crémaillère et/ou un parallélogramme articulé et/ou un câble Bowden.

6. Système selon l'une des revendications 1 à 5, **caractérisé en ce que** l'espace de chargement (2) est délimité sur les côtés par des parois de bords réglables en hauteur (8a, 8b, 8c, 8d).

7. Système selon la revendication 6, **caractérisé en ce qu'**au moins une paroi de bord réglable en hauteur (8d) est réalisée sous forme de porte arrière de hauteur variable.

8. Système selon la revendication 6 ou 7, **caractérisé en ce que** les parois de bords réglables en hauteur (8a, 8b, 8c 8d) sont respectivement constituées d'une bâche (10) pouvant être enroulée autour d'un axe horizontal (9).

9. Système selon la revendication 6 ou 7, **caractérisé en ce que** les parois de bords réglables en hauteur (8a, 8b, 8c 8d) sont constituées de panneaux de paroi (11) coulissants ou repliables.

10. Système selon l'une des revendications 1 à 9, **caractérisé en ce que** le module (12) de reconnaissance de la hauteur de chargement détecte la hauteur du chargement au moyen d'au moins un laser et/ou un détecteur à ultrasons et/ou un détecteur infrarouge.

11. Système selon la revendication 10, **caractérisé en ce que** le laser et/ou le détecteur à ultrasons et/ou le détecteur infrarouge sont à la fois émetteurs et récepteurs (13) et coopèrent avec des réflecteurs (14) disposés sur le côté opposé de l'espace de chargement (2).

12. Système selon la revendication 10, **caractérisé en ce que** le détecteur à ultrasons est réalisé sous la forme d'une unité à ultrasons (15) pour le balayage en 3D de l'espace de chargement (2).

13. Système selon l'une des revendications 1 à 12, **caractérisé en ce que** le réglage en hauteur de la paroi de toit (4) s'effectue en fonction de la vitesse de marche.

14. Système selon l'une des revendications 1 à 13, **caractérisé en ce qu'**un déflecteur (16), dont l'inclinaison peut être adaptée à la hauteur réglée de la paroi de toit (4), est disposé sur le toit du camion (1).
